# EUROPÄISCHE PATENTANMELDUNG

(11) **EP 2 428 835 A1**
(43) Veröffentlichungstag der Anmeldung: **14.03.2012**
(21) Anmeldenummer: 11175246.5
(22) Anmeldetag: 25.07.2011
(51) Int. Cl.: G02C 7/06, G02C 7/02

(54) **Verfahren zur Herstellung von kostenoptimierten Brillengläsern mit besonders verteilhaften Eigenschaften für den Nutzer**

(30) Priorität: 08.09.2010 DE 102010037400
(71) Anmelder: Opto Tech Optikmaschinen GmbH, 35435 Wettenberg (DE)
(72) Erfinder: Mandler, Roland, 35452 Heuchelheim (DE)
(74) Vertreter: Buchhold, Jürgen

(57) **Zusammenfassung**

Die Erfindung betrifft ein Verfahren zum Herstellen von Brillengläsern aus spanlos vorgefertigten Rohlinsen. Die Rohlinsen weisen eine nicht nachzubearbeitende Vorderseite und eine mittels CNC-Maschine nachzubearbeitende gegenüberliegende Rückseite auf, die gemeinsam wenigstens einen optischen Brennpunkt haben. Zur Nachbearbeitung der Rückseite wird auf Basis eines einen Sehfehler beschreibenden Rezepts und der Geometrie der Vorderseite eine Rezeptfläche berechnet. Diese bildet gemeinsam mit der Vorderseite eine Rezeptlinse, deren Brennpunkte den Sehfehler korrigieren. Dabei wird die Vorderseite derart gestaltet, dass sie eine konvexe und rotationssymmetrische erste Freiformfläche ist. Diese setzt sich rotationssymmetrisch um eine Mittelachse aus wenigstens zwei sphärischen Abschnitten unterschiedlicher Radien zusammen, wobei die sphärischen Abschnitte tangential aneinandergrenzen. Weiterhin hat das Brillenglas ein optisches Zentrum, durch welches ein Brillenträger bei einem Geradeausblick schaut (Nullblickrichtung). Dabei wird das Brillenglas durch eine Anpassung der Rohlinse an ein Brillengestell derart gefertigt, dass die Mittelachse der Rohlinse außerhalb des optischen Zentrums des Brillenglases liegt.

## Beschreibung

Die Erfindung betrifft gemäß dem Oberbegriff von Anspruch 1 ein Verfahren zum Herstellen von Brillengläsern aus spanlos vorgefertigten Rohlinsen. Dabei haben die Rohlinsen eine senkrecht auf diesen stehende Mittelachse und weisen eine konvexe und rotationssymmetrisch um die Mittelachse ausgebildete und nicht nachzubearbeitende Vorderseite sowie eine mittels CNC-Maschine nachzubearbeitende gegenüberliegende Rückseite auf. Die Mittelachse ist eine rein geometrische Achse und nicht tatsächlich physisch vorhanden. Vorder- und Rückseite haben gemeinsam wenigstens einen optischen Brennpunkt. Des Weiteren beschreibt ein Rezept einen Sehfehler eines Rezepteigners. Zur Nachbearbeitung der Rückseite wird auf Basis des Rezepts und der Geometrie der Vorderseite eine Rezeptfläche berechnet. Diese bildet gemeinsam mit der Vorderseite eine Rezeptlinse, deren Brennpunkte den Sehfehler des Rezepteigners korrigieren. Durch Anpassung an ein Brillengestell wird aus der Rezeptlinse ein Brillenglas mit einem optischen Zentrum gefertigt, durch welches ein Brillenträger bei einem Geradeausblick schaut. Dieser Geradeausblick wird auch als Nullblickrichtung bezeichnet.

Brillengläser dienen als Sehhilfe und sind in vielfältiger Form verfügbar. Zwei Brillengläser werden üblicherweise von einem Gestell verbunden und bilden gemeinsam mit diesem eine Brille, die derart vor zwei Augen positioniert werden kann, dass vor jedem Auge ein Brillenglas angeordnet ist.

Die Funktion eines Brillenglases basiert auf den physikalischen Eigenschaften einer optischen Linse. Voraussetzung ist ein optisch durchlässiges Material. Eine Vorder- und eine Rückseite der Linse werden derart gefertigt, insbesondere geschliffen, dass diese durch konvexe und konkave Formgebung wenigstens einen optischen Brennpunkt bilden. Die Festlegung des Brennpunktes einer Linse erfolgt in Abhängigkeit eines Sehfehlers einer Person, der mit Hilfe der Linse idealerweise ausgeglichen wird. Dabei wird insbesondere der fehlerhafte natürliche Brennpunkt des Auges durch die Linse korrigiert.

Insbesondere zu einer Korrektur von Alterssichtigkeit kann es notwendig sein, dass die Linse mehrere Brennpunkte haben muss. Je nach Entfernung eines Objektes zum Auge wölbt sich die Augenlinse unterschiedlich stark. Bei der Alterssichtigkeit ist diese Elastizität eingeschränkt - die Augenlinse verhärtet und verdickt sich. Dies führt dazu, dass der Sehfehler des Auges bei Objekten in kurzer Distanz zum Auge (Nahsichtbereich) ein anderer ist als der bei weit entfernten Objekten (Weitsichtbereich). Um Objekte in allen Distanzen zum Auge scharf sehen zu können, muss der Brennpunkt des Auges je nach Distanz des Objekts zum Auge durch einen bestimmten Brennpunkt einer Linse korrigiert werden. Naheliegendste und klassische Lösung ist es, je nach Distanz des Objekts zum Auge zu einer Linse bzw. einer Brille mit einem anderen Brennpunkt zu wechseln. Es ist jedoch auch möglich eine Linse derart zu gestalten, dass sie mehrere Brennpunkte in unterschiedlichen Zonen der Linse hat. Durch eine derartige Ausgestaltung ist es möglich, dass ein Wechseln der Linse unterbleiben kann und stattdessen durch eine Veränderung der Blickrichtung die Zone der Linse gewechselt wird.

Hat eine Linse zwei unterschiedliche Brennpunkte, in der Regel einen für den Weitsichtbereich und einen für den Nahsichtbereich im unteren Bereich des Brillenglases, so wird die Linse als bifokale Linse bezeichnet. Erkennbar sind derartige Gläser zumeist durch einen sichtbaren Übergang zwischen den beiden Bereichen. Sofern der Brennpunkt bei einer Blickwinkeländerung, insbesondere von oben nach unten, mehrfach ein anderer ist, wird von einer multifokalen Linse gesprochen. Dabei kann der Brennpunkt auch kontinuierlich ein anderer sein.

Zur Herstellung von Brillengläsern kommen verschiedene Verfahren zum Einsatz. Im einfachsten Fall werden Brillengläser aus flachen Rohlingen in mehreren Arbeitsschritten hergestellt. Bei diesen Rohlingen handelt es sich um ebene Scheiben aus Silikatglas oder Kunststoff. Zunächst werden bei diesem Verfahren die gewünschten Geometrien der optischen Flächen auf beiden Seiten der Linse durch mechanische Bearbeitung (Drehen, Fräsen, Schleifen) hergestellt, wobei die erzeugten Oberflächen eine große Rautiefe aufweisen und damit optisch undurchlässig sind. An die Zerspanung schließt sich daher ein Poliervorgang an. Hierbei wird die Rautiefe der Oberflächen soweit verringert, dass Licht nicht mehr unzulässig zerstreut wird und die Linse somit durchsichtig ist.

Preiswerte Standardbrillen haben heute in der Regel standardisierte Linsen. Durch Gießen oder Spritzgießen werden zunächst kreisrunde Linsen hergestellt. Die Qualität derartiger Linsenoberflächen ist so hoch, dass keine weitere Nachbearbeitung der Oberfläche notwendig ist. Lediglich die Kontur muss an ein vorgesehenes Brillengestell angepasst werden. Derartige Linsen haben in der Regel sowohl eine sphärische Vorderseite, als auch eine sphärische Rückseite. Unter sphärisch ist zu verstehen, dass die Oberfläche ein Kugelausschnitt ist, bzw. dass alle Punkte auf der Oberfläche in einem Abstand Radius R von einem Kugelmittelpunkt entfernt liegen. Linsen dieser Bauart haben einige Nachteile. Die standardisierten Linsen sind zwar äußerst preiswert in der Anschaffung, erfüllen jedoch meist nicht die Wünsche an die Sehschärfe im Nah- und Fernbereich, sowie über den gesamten Blickwinkel von oben nach unten und von links nach rechts.

Zur Reduktion dieser Qualitätsmängel werden hochwertigere Brillengläser meistens individualisiert, indem die Augen vermessen werden und berechnet wird, wie eine Linse aufgebaut sein muss, um einen bestehenden Sehfehler eines Auges optimal zu beheben. Das Ergebnis der Berechnung wird üblicherweise von einem Optiker oder Augenarzt dokumentiert und in Form eines Rezepts an denjenigen weitergeleitet, der die Linse fertigt. Deshalb wird im Folgenden eine nach Rezept individualisierte Linse als Rezeptlinse bezeichnet.

Um Rezeptlinsen herzustellen, kommen verschiedene Verfahren in Betracht. Aus wirtschaftlichen Gründen haben sich insbesondere Verfahren durchgesetzt, die eine in Großserie gefertigte Rohlinse durch spanende Verfahren und Polieren individuell nachbearbeiten. Rohlinsen aus Kunststoff entstehen in der Regel durch Gießen oder Spritzgießen und Rohlinsen aus Silikatglas durch Absenken von erwärmten Glasronden in Formen. Die Qualität derartiger Linsenoberflächen, insbesondere der Vorder- und der Rückseite, ist so hoch, dass grundsätzlich keine weitere Nachbearbeitung der Oberfläche notwendig wäre. Allerdings weist eine derartige Linse einen oder mehrere standardisierte Brennpunkte auf, die den Sehfehler eines bestimmten Auges häufig nicht optimal korrigieren. Deshalb wird die Rohlinse oder Teilbereiche von dieser, zum Beispiel nur eine Seite, durch Nachbearbeitung individuell an den Sehfehler des bestimmten Auges angepasst. Hierfür wird basierend auf den vorderseitigen und rückseitigen Oberflächen der Rohlinse und einem Rezept ein Materialabhub zur Gestaltung der Rezeptlinse berechnet. Die Parameter der Oberflächengeometrie der Rohlinse sind für diese Berechnung zwingend erforderlich. Anschließend kann eine Nachbearbeitung auf Vorder- und Rückseite oder nur auf einer Seite erfolgen. Eine einseitige Nachbearbeitung verursacht in der Regel geringere Herstellungskosten als eine zweiseitige, da der Nachbearbeitungsaufwand geringer ist. Wird eine Seite durch Nachbearbeitung individualisiert, handelt es sich um eine so genannte Rezeptfläche.

Die Nachbearbeitung erfolgt heute mit modernen CNC-Fräsmaschinen, sodass auch komplizierte Oberflächengestaltungen realisierbar sind. Die Nachbearbeitung einer Rohlinse ist jedoch dahingehend begrenzt, dass sowohl die Stabilität der Linse gewahrt bleiben muss, als auch die Krümmungsradien und die Materialstärke der Rohlinsen den Änderungen Grenzen auferlegen. Deshalb ist zumindest eine bestimmte Anzahl verschiedenartiger Rohlinsen erforderlich, um Linsen für eine möglichst große Sehfehlerspanne fertigen zu können. Linsen für seltene und extrem starke Sehfehler, die nicht in diese Spanne fallen, müssen durch andere Herstellungsverfahren gefertigt werden, zum Beispiel durch die Herstellung aus einem Materialquader.

Eine Herstellung von individualisierten Brillengläsern aus Rohlinsen wird unter anderem in der EP 0 744 646 A1 beschrieben. Es kommen verschiedenartige Rohlinsen zum Einsatz, bei denen eine Seitenfläche bereits fertiggestellt ist. Diese werden durch einen Gieß- oder Spritzgießprozess hergestellt. Dabei ist die Vorderseite der Rohlinse konvex und sphärisch ausgebildet. Die Rezeptfläche wird auf Basis eines Rezepts, welches von einem Augenarzt ausgestellt wird, berechnet und anschließend durch Zerspanen und Polieren hergestellt. Sie kann sphärisch, torisch oder multifokal sein. Die gewünschten optischen Eigenschaften des Brillenglases ergeben sich letztlich in Kombinationen der standardisierten sphärischen Vorderseite und der Rezeptseite und entsprechen dem vorgegebenen Rezept.

Aus einer Rezeptfertigung nach EP 0 744 646 A1 ergeben sich jedoch erhebliche Nachteile. Durch die sphärische Vorderseite ist die rückseitige Rezeptfläche im unteren Brillenglasbereich, der den Sehfehler im Nahsichtbereich korrigieren soll, sehr flach. Es können sogar konvexe Krümmungen auf der Rückseite des Brillenglases erforderlich sein, um den Sehfehler zu beheben. Dies empfinden Brillenträger als äußerst unangenehm und störend. Insbesondere führt dies zu einem anderen optischen Fehler: Je schräger ein Brillenträger auf die rückseitige Fläche der Linse blickt, desto stärker ist die prismatische Wirkung der Linse. Diese verursacht Verzerrungen, da Licht unterschiedlicher Wellenlänge unterschiedlich stark gebrochen wird. Die rückseitige Fläche der Linse sollte dementsprechend so gestaltet werden, dass die Linsenoberfläche in jeder Blickrichtung senkrecht zu dieser steht. Das heißt, die Rückseite der Linse muss konkav sein. Diese zentrale Forderung wird von EP 0 744 646 A1 jedoch nicht erfüllt.

Eine Herstellung von individualisierten Brillengläsern wird auch in DE 197 01 312 A1 beschrieben. Diese beschreibt eine Rohlinse, die ausschließlich auf der Rückseite nachbearbeitet wird. Das bedeutet, dass die Rezeptfläche auf der Rückseite der Linse liegt. Die Vorderseite hingegen bleibt unverändert und hat eine sphärische oder eine asphärische Vorderseite. Eine asphärische Oberfläche ist dadurch gekennzeichnet, dass sie von einer mathematischen Funktion nach DIN ISO 10110-12 beschrieben werden kann. Dabei verändert sich der Radius kontinuierlich von der Mittelachse nach außen. Die Rückseite der Linse wird nach Rezept als multifokale Freiformfläche berechnet und durch Nachbearbeitung erstellt.

Auch DE 101 03 113 A1 beschreibt eine rotationssymmetrische und insbesondere sphärische Vorderseite einer Linse, ohne diese jedoch weiter auszuführen.

Weiterhin ist aus EP 1 990 676 A2 eine Rohlinse bekannt, die disymmetrisch ist und bei der nur die Rückseite nachbearbeitet werden soll. Die Vorderseite der Rohlinse wird von zwei Teilflächen gebildet. Während es sich bei der Hauptfläche um eine Sphäre handelt, ist dezentral in der Hauptfläche eine torische Fläche angeordnet. Diese torische Fläche weist eine geringere Krümmung als die Hauptfläche auf und soll später im unteren Bereich des Brillenglases angeordnet sein, insbesondere in dem Bereich des Brillenglases, der den Sehfehler im Nahsichtbereich korrigieren soll. Torische Flächen bzw. torische Gläser dienen nicht nur zur Korrektur einer Kurz- oder Weitsichtigkeit, sondern auch zum Ausgleich einer Hornhautverkrümmung (Astigmatismus). Ihr Aufbau ist komplizierter. Auf einem Rezept sind torische Gläser daran erkennbar, dass die Stärke in drei Teilen notiert ist. Die einzelnen Teile werden als Sphäre (sph), Cylinder (cyl) und Achse bezeichnet.

Nachteilig bei EP 1 990 676 A2 ist, dass die prismatische Wirkung in horizontaler Richtung nicht berücksichtigt wird. Die sich hieraus ergebenden Unschärfen in die Blickrichtungen links und rechts, bzw. temporal und nasal, sind nicht nur für den Brillenträger störend, sondern z.B. im Falle eines Fahrzeugführers, der einen Schulterblick mit einer derartigen Brille durchführt, auch gefährlich für ihn selbst und Dritte. Häufig leiden Brillenträger wegen dieser Unschärfen auch an Übelkeit, Kopfschmerzen und Schwindelgefühlen.

Weiterhin ist die Ästhetik des Brillenglases beeinträchtigt, da der Übergang von der sphärischen auf die torische Fläche auf der Vorderseite der Linse insbesondere durch Lichtreflexe wahrnehmbar ist. Außerdem fordert die Disymmetrie eine sehr genaue rotatorische Ausrichtung der Rohlinse im Werkzeug, bevor die Bearbeitung der Rezeptfläche erfolgen kann. Geschieht dies nicht, liegt die bearbeitete Fläche nicht an dem Ort, der gemäß Berechnung zu einer optimalen Korrektur des Sehfehlers führt. Die Linse wäre dann unbrauchbar.

Aus DE 1 422 125 A ist eine weitere Gestaltung der Vorderseite bekannt. Diese hat eine asphärische und sich stetig ändernde Oberfläche. Insbesondere wird die Asphäre durch eine Evolvente beschrieben, welche mit einer Evolute konstruiert ist. Eine solche durch eine Evolvente beschriebene asphärische Vorderseite für Brillengläser wird auch von DE 1 115 609 B beschrieben. Diese Evolvente wird durch eine Evolute erzeugt, welche aus mehreren Kreisbogenstücken zusammengesetzt ist. Auch bei einer solchen Konstruktion ändert sich die Oberfläche der Rohlinsenvorderseite stetig und kontinuierlich.

Eine weitere Ausbildung der Oberfläche einer Brillenglasrohlinse beschreibt US 4 484 804 A. Hier ist die Oberfläche durch zwei Sphären mit unterschiedlichen Radien ausgebildet. Insbesondere wird ein Bereich der Oberfläche, der später im Nahsichtbereich des Brillenglases liegen soll, durch eine Sphäre mit abweichendem Radius ausgebildet. Um eine sichtbare Kante in dem Übergang zwischen der ersten und der zweiten Asphäre zu verhindern, wird der Übergang geglättet.

Aufgabe der Erfindung ist es, die Wirtschaftlichkeit und die Qualität bei der Fertigung von Brillengläsern zu steigern. Zu berücksichtigen ist dabei insbesondere eine Verringerung der prismatischen Wirkung in allen Blickrichtungen. Dabei soll beachtet werden, dass modische Anforderungen an die Vorderseite des Brillenglases bestehen. Idealerweise sollte die Anzahl an unterschiedlichen Linsenrohlingen begrenzt sein, um die Vorhaltekosten gering zu halten. Die weiteren Nachteile des Stands der Technik sollen vermieden werden.

Hauptmerkmale der Erfindung sind im kennzeichnenden Teil von Anspruch 1 angegeben. Ausgestaltungen sind Gegenstand der Ansprüche 2 bis 13.

Die Erfindung betrifft ein Verfahren zum Herstellen von Brillengläsern aus spanlos vorgefertigten Rohlinsen, die vorzugsweise aus Kunststoff oder Silikatglas bestehen und vorzugsweise kreisförmig sind. Dabei haben die Rohlinsen eine senkrecht auf diesen stehende Mittelachse und weisen eine konvexe und rotationssymmetrisch um die Mittelachse ausgebildete und nicht nachzubearbeitende Vorderseite sowie eine mittels CNC-Maschine nachzubearbeitende gegenüberliegende Rückseite auf, die gemeinsam wenigstens einen optischen Brennpunkt haben. Die Mittelachse ist eine rein geometrische Achse und nicht tatsächlich physisch vorhanden.

Ein Rezept beschreibt einen Sehfehler eines Rezepteigners. Zur Nachbearbeitung der Rückseite wird auf Basis des Rezepts und der Geometrie der Vorderseite eine Rezeptfläche berechnet. Diese bildet gemeinsam mit der Vorderseite eine Rezeptlinse, deren Brennpunkte den Sehfehler des Rezepteigners korrigieren. Aus der Rezeptlinse wird durch Anpassung an ein Brillengestell ein Brillenglas mit einem optischen Zentrum, durch welches ein Brillenträger bei einem Geradeausblick (Nullblickrichtung) schaut, gefertigt. Dabei wird die Vorderseite der Rohlinse als eine erste Freiformfläche ausgebildet, die sich von der Mittelachse nach außen aus wenigstens zwei sphärischen Abschnitten unterschiedlicher Radien zusammensetzt, wobei die sphärischen Abschnitte tangential in einem Sphärenübergang aneinandergrenzen. Zusätzlich wird die Rezeptlinse derart an das Brillengestell angepasst, dass die Mittelachse der Rohlinse außerhalb des optischen Zentrums des Brillenglases liegt.

Das tangentiale Aneinandergrenzen der Sphärenübergänge bedeutet, dass die Tangenten der aneinandergrenzenden Sphären in dem Punkt, in dem sie sich berühren, gleich sind. Somit bestehen keine Knicke auf der Vorderseite und jeder Punkt auf der Vorderseite ist mathematisch differenzierbar. Dass heißt, jeder Punkt auf der Vorderseite hat nur einen Ebenennormalenvektor. Dabei ist von einer makroskopischen Oberfläche auszugehen und nicht von einer mikroskopischen.

Die Rohlinsen sind in der Regel kreisförmig. Der äußere Rand der Rohlinse kann jedoch auch ein Ausschnitt aus einer runden Rohlinse sein, der eine von der Kreisform abweichende Form hat. Der äußere Zuschnitt ist unerheblich, entscheidend ist, ob eine nicht kreisförmige Linse als ein Ausschnitt aus einer erfindungsgemäßen kreisförmigen Linse gewonnen werden kann. Es könnte beispielsweise von Vorteil sein, dass die Rohlinsen eine viereckige Form haben, wenn die meisten verkauften Brillengläser aufgrund eines Modetrends ebenfalls viereckig sind. Hierdurch würde der Abfall, der sich aus der Anpassung der Roh- oder Rezeptlinse an das Brillengestell ergibt, verringert werden.

Vorzugsweise sind die Rohlinsen flache Rohlinge aus Silikatglas oder Kunststoff. Rohlinsen aus Kunststoff könnten durch Gießen oder Spritzgießen und Rohlinsen aus Silikatglas durch Absenken von erwärmten Glasronden in Formen hergestellt werden. Die Qualität der Rohlinsenoberfläche sollte dabei so hoch sein, dass grundsätzlich keine weitere Nachbearbeitung der Vorder- und Rückseite notwendig ist. Auf diese Weise kann die Rohlinse auch ohne Nachbearbeitung der Vorder- und der Rückseite an ein Brillengestell angepasst werden und von einer Person mit einem Sehfehler zur Korrektur von diesem genutzt werden. Ist ein besonderer Brillentyp besonders nachgefragt, ist es auch möglich die äußere Geometrie der Rohlinsen derart zu gestalten, dass die Rohlinse ohne jegliche Nachbearbeitung in ein Brillengestell eingesetzt werden kann. In einem solchen Fall würde es sich dann um ein Spezialwerkzeug für ein Standard-Brillenglas handeln, dessen grundsätzliche Gestaltung der Vorder- und Rückseite jedoch der erfindungsgemäßen Rohlinse entspricht.

Um einen Augenfehler jedoch optimal zu beheben, kann eine Individualisierung der Rohlinse nach Rezept durch eine Nachbearbeitung der gesamten Rohlinse oder von Teilbereichen der Rohlinse notwendig sein. Ein Rezept ist jede Informationsquelle über einen Sehfehler. Es muss sich hierbei nicht um ein schriftliches Dokument eines Arztes oder Optikers handeln. Basierend auf den vorderseitigen und rückseitigen Oberflächen der Rohlinsen, kann der Materialabhub zur Gestaltung der Rezeptfläche berechnet werden. Die Parameter der Oberflächengeometrie von Vorder- und Rückseite der Rohlinse sind für diese Berechnung zwingend erforderlich. Anschließend kann eine Nachbearbeitung der Rückseite zur Rezeptfläche erfolgen. Eine einseitige Nachbearbeitung verursacht in der Regel geringere Herstellungskosten als eine zweiseitige.

Die Nachbearbeitung der Rückseite erfolgt mit modernen CNC-Maschinen. Zunächst wird die Rezeptfläche durch mechanische Bearbeitung (Drehen, Fräsen, Schleifen) hergestellt. Da eine derart erzeugte Oberfläche in der Regel eine zu große Rautiefe aufweist, ist sie optisch undurchlässig. Deshalb schließt sich an die Zerspanung in der Regel ein Poliervorgang an. Hierbei wird die Rautiefe der Oberflächen soweit verringert, dass Licht nicht mehr unzulässig zerstreut wird und die Linse somit durchsichtig ist.

Nach der Bearbeitung der Rückseite zu einer Rezeptfläche, ist lediglich noch die Kontur der Rezeptlinse an ein vorgesehenes Brillengestell anzupassen. Dieser Arbeitsschritt könnte jedoch auch vor oder während der Bearbeitung der Rückseite erfolgen. Es besteht auch die Möglichkeit, die Vorderseite zu bearbeiten, falls notwendig. Dies könnte bei speziellen Sehfehlern notwendig sein, oder aber um kleine Kratzer auszupolieren, die unter anderem während der unterschiedlichen Arbeitsschritte entstehen können. Grundsätzlich sollte eine Nachbearbeitung der Vorderseite aber vermieden werden, da dies einen erhöhten Arbeitsaufwand bedeutet. Besondere Vorteile der Erfindung ergeben sich aus der Geometrie der Vorderseite der Rohlinse. Durch die um die Mittelachse rotationssymmetrische Oberfläche der Vorderseite, ist keine Winkelausrichtung in Rotationsrichtung im Werkzeug vor der Nachbearbeitung der Rohlinse erforderlich. Egal in welchem Winkel um die Rotationsachse die Rohlinse vor einer Nachbearbeitung zum Werkzeug angeordnet wird, ist nach der Nachbearbeitung die Geometrie der entstandenen Rezeptlinse gleich. Lediglich die Mittelachse der Rohlinse muss in eine definierte Position gebracht werden. Nach Einsatz des Werkzeugs befindet sich die erstellte Rezeptfläche an dem Ort, der gemäß Berechnung zu einer optimalen Korrektur des Sehfehlers führt. Es sind somit keine konstruktiven Maßnahmen notwendig, um die Ausrichtung in Rotationsrichtung zu ermöglichen.

Bei einer rotationssymmetrischen Rohlinse ist keine Einkerbung am Rand der Rohlinse zur Ausrichtung in einem Spezialwerkzeug notwendig. Damit ist erfindungsgemäß keine händische Ausrichtung in Rotationsrichtung notwendig und die Gefahr, dass die Rezeptfläche verdreht zur Vorderseite angeordnet sein könnte, ist ausgeschlossen und der Ausschuss somit gering. Dadurch ist die Wirtschaftlichkeit des erfindungsgemäßen Verfahrens hoch.

Außerdem könnte ein Bereich, in dem eine Einkerbung sitzt, nicht Bestandteil des späteren Brillenglases sein. Es wäre dementsprechend ein Rand einzuplanen und die Rohlinse müsste entsprechend größer gestaltet werden. Die erfindungsgemäße Rohlinse benötigt keine Einkerbung und trägt somit dazu bei, dass die Rohlinse klein gestaltet werden kann und somit wenig Herstellungs-, Lager- und Transportkosten verursacht. Zusätzlich trägt sie zum Schutz der Umwelt bei.

Die erfindungsgemäßen Rohlinsen können auch von bereits vorhandenen Werkzeugaufnahmen aufgenommen werden. Das ist besonders deshalb wichtig, da die Vorhaltung von Spezialwerkzeugen eine Wachstumsbarriere im Vertrieb darstellen könnte, da nicht jeder Optiker Spezialwerkzeug für jeden Rohlinsentypen bereithalten möchte. Da kein Spezialwerkzeug notwendig ist, ist die Chance, einen hohen Marktanteil gewinnen zu können, hoch.

Besonders vorteilhaft ist die Anordnung von wenigstens zwei unterschiedlichen Sphären auf der Vorderseite. Bei genau zwei unterschiedlichen Sphären, ist ein bifokales Brillenglas herstellbar, dessen Vorderseite nicht bearbeitet werden muss und bei der die Rohlinse dennoch rotationssymmetrisch ist. Jede Sphäre weist hierzu einen anderen Brennpunkt auf. So kann ein regelmäßiges Wechseln der Brille bei unterschiedlichen Aktivitäten vermieden werden.

Dadurch dass aneinandergrenzende Sphären tangential in einem Sphärenübergang zueinander angeordnet sind, sodass die Tangenten der aneinandergrenzenden sphärischen Abschnitte im Sphärenübergang gleich sind, wird ein harmonischer Übergang zwischen zwei Sphären gewährleistet, was beim Tragen der Sehhilfe vom Brillenträger als angenehm empfunden wird. Zudem hat dies auch ästhetische Vorteile, denn es sind folglich keine Kanten auf der Vorderseite eines derartig hergestellten Brillenglases vorhanden, an denen Licht abrupt unterschiedlich brechen könnte. Insgesamt erhält das Brillenglas durch die Anordnung der Sphären auch einen dynamisch-sportlichen Charakter. Ein solches Brillenglas wirkt für äußere Betrachter harmonisch. Weiterhin wird auch eine optisch vorteilhafte Gestaltung des Brillenglases erreicht. Dies hat wirtschaftliche Vorteile, da so ein größeres Spektrum unterschiedlicher Brillengestellformen genutzt werden kann.

Die Anzahl der Sphären, die gemeinsam die Vorderseite bilden, kann beliebig gewählt werden, sodass auch Gleitsicht-Brillengläser herstellbar sind. Die Rotationssymmetrie kann bei jeder Anzahl von Sphären gewahrt bleiben.

Da bereits die Vorderseite der Rohlinse wenigstens zwei Sphären aufweist, ist es auch nicht notwendig, die unterschiedlichen Brennpunkte zur Behebung eines Sehfehlers ausschließlich durch Bearbeitung der Rückseite zu erreichen. Hierdurch können sowohl die Rohlinsen als auch die Brillengläser deutlich dünner gestaltet werden, was den Tragekomfort erheblich steigert und auch hohen ästhetischen Anforderungen gerecht wird. Zudem ist der Materialabhub geringer, da die Rohlinse bereits näher am Endergebnis des Brillenglases liegt, als beispielsweise eine einfache sphärische Rohlinse. Gleichzeitig wird wiederum Material eingespart, was die Herstellungs-, Lager- und Transportkosten reduziert und zusätzlich zum Schutz der Umwelt beiträgt.

Durch die Anordnung von Sphären unterschiedlicher Radien sowie dem Auseinanderfallen der Mittelachse der Rohlinse und der Nullblickrichtung des Brillenglases kann gewährleistet werden, dass die prismatische Wirkung in horizontaler und vertikaler Blickrichtung reduziert wird. Die Unschärfen im Randbereich des Brillenglases sind durch die mit der Vorderseite korrespondierende Rückseite deutlich reduziert, da auf der Rückseite keine flachen oder konvexen Geometrien, insbesondere auch im Nahsichtbereich des Brillenglases, notwendig sind. Die Rezeptfläche der Linse korrespondiert derart mit der Vorderseite, dass sie stets konkav ist und die prismatische Wirkung in allen Blickrichtungen deutlich reduziert ist. Dies führt zu einem hohen Tragekomfort, da aus den Unschärfen resultierende Übelkeiten, Kopfschmerzen und Schwindelgefühle vermieden werden. Zudem sind für den Brillenträger Gegenstände in einem größeren Blickwinkel erkennbar, sodass eine hohe Sicherheit gegeben ist.

In einer Ausführungsform der Erfindung wird die Rückseite der Rohlinse derart gestaltet, dass sie sphärisch oder asphärisch ist. Eine sphärische Gestaltung erfordert einen geringen Berechnungsaufwand.

Eine Verbesserung zu einer sphärischen Rückseite stellt eine asphärische Rückseite dar. Diese erfordert einen größeren Berechnungsaufwand, führt aber zu einer Rohlinse, deren Geometrie deutlich näher am zu fertigenden Brillenglas liegt. Hierdurch reduziert sich die Rohlinsendicke erheblich und es wird weniger Material verbraucht. Zudem reduziert sich der Materialabhub, um zum Endergebnis der Rezeptlinse zu gelangen. Hierdurch werden die Herstellungs-, Lager- und Transportkosten reduziert und zusätzlich wird zum Schutz der Umwelt beigetragen.

Idealerweise wird die Rückseite der Rohlinse jedoch derart gestaltet, dass sie eine konkave und rotationssymmetrische zweite Freiformfläche ist, die sich von der Mittelachse nach außen aus wenigstens zwei sphärischen Abschnitten unterschiedlicher Radien zusammensetzt und die sphärischen Abschnitte tangential in einem Sphärenübergang aneinandergrenzen.

Auf diese Weise ist es möglich, die Rückseite bereits bei der Rohlinse auf die Geometrie der Vorderseite auszulegen. Eine derartige Rohlinse ist bereits ohne Nachbearbeitung von Vorder-und Rückseite als Brillenglas einsetzbar, sofern hierdurch ein Sehfehler behoben wird. Der notwendige Materialabhub, um zu einem endgültigen Brillenglas zu gelangen, ist gegenüber einer asphärischen Rückseite nochmals reduziert. Hierdurch werden minimale Herstellungs-, Lager-und Transportkosten erreicht und maximal zum Schutz der Umwelt beigetragen.

Wird eine derartige Rohlinse als Ausschnitt einer runden Rohlinse zum Beispiel direkt in eine entsprechende Form gegossen, ist die Rohlinse auch direkt als Standardbrillenglas einsetzbar. Vorzugsweise hat der sphärische Abschnitt der Vorderseite, der näher an der Mittelachse angeordnet ist, einen größeren Radius als ein weiter von der Mittelachse entfernter sphärischer Abschnitt der Vorderseite. Hierdurch nimmt die Krümmung der Rohlinse mit zunehmendem Abstand von der Mittelachse zu. Dies hat Vorteile hinsichtlich der Ästhetik und auch die Unschärfen im Randbereich können so reduziert werden, da keine konvexen und flachen Bereiche in der Rezeptfläche notwendig sind, die mit der Vorderseite korrespondiert.

Idealerweise folgt die Rückseite der Vorderseite, indem der sphärische Abschnitt der Rückseite, welcher näher an der Mittelachse angeordnet ist, einen größeren Radius hat als ein weiter von der Mittelachse entfernter sphärischer Abschnitt der Rückseite. Somit liegt die Geometrie der Rohlinse möglichst nahe am Endergebnis der Rezeptlinse. Hierdurch wird der Nachbearbeitungsaufwand reduziert, da ein geringerer Materialabhub zur Fertigung der Rezeptfläche erforderlich ist.

In einer Ausführungsform der Erfindung ist vorgesehen, dass eine Glättung an wenigstens einem Übergang von aneinandergrenzenden sphärischen Abschnitten erfolgt. Nach der Glättung ist jeder Punkt auf der Vorderseite und/oder der Rückseite mathematisch differenzierbar. Dass heißt, jeder Punkt auf der Vorder- und Rückseite hat nur einen einzigen Ebenennormalenvektor. Dabei ist bei der Vorder- und/oder Rückseitengeometrie von der makroskopischen Oberfläche auszugehen, nicht jedoch zum Beispiel von einer mikroskopischen kristallographischen Oberfläche. Der geglättete Übergang ist nicht sphärisch, jedoch grenzt der geglättete Übergang tangential an die daran angrenzenden sphärischen Abschnitte. Auf diese Weise ist sichergestellt, dass keine harten Übergänge von einem Brennpunkt auf einen anderen vorhanden sind. Dadurch erhöht sich der Tragekomfort. Außerdem sind auch keine Knicke in den Oberflächen vorhanden, sodass die Rohlinse und ein daraus gewonnenes Brillenglas höchsten ästhetischen und optischen Anforderungen genügt.

Die Vorder- und die Rückseite sollten ferner derart gestaltet werden, dass sie zusammen wenigstens eine bifokale Rohlinse, vorzugsweise jedoch eine multifokale Rohlinse bilden. Hierdurch ist gewährleistet, dass bereits die Rohlinse über geeignete und funktionale optische Eigenschaften verfügt. Sie kann somit bereits ohne Nachbearbeitung genutzt werden, falls dies gewünscht sein sollte. Auf diese Weise lassen sich auch preiswerte standardisierte Brillengläser anbieten, die für zahlreiche Nutzer ausreichend sein können.

Es ist von besonderem Vorteil, wenn die Rezeptfläche im Wesentlichen konkav gestaltet wird. Dabei kann die Rezeptfläche sphärisch und/oder asphärisch und/oder atorisch und/oder torisch sein, vorzugsweise ist sie jedoch eine Rezeptfreiformfläche. Die Gestaltung der Rezeptfläche richtet sich nach den Angaben des Rezeptes, sie kann dabei jedoch auch bekannte Formgebungen, zum Beispiel eine einfache Sphäre, eine berechenbare Asphäre, eine atorische oder torische Form annehmen. Torische Brillengläser dienen nicht nur zur Korrektur einer Kurz- oder Weitsichtigkeit, sondern auch zum Ausgleich einer Hornhautverkrümmung (Astigmatismus). Die Geometrie einer torisch gebogenen Fläche weist in zwei Hauptschnitten verschiedene Krümmungen auf. Bei einer atorischen Form wäre die Fläche in jedem Meridian unterschiedlich gekrümmt. Derartige Rezeptflächen wären bereits komplex.

Idealerweise wird eine Rezeptfreiformfläche jedoch derart auf Basis der Vorderseite und des Rezepts berechnet, dass alle Sehfehler in jedem Blickwinkel des Brillenträgers korrigiert werden. Die Rezeptfreiformfläche hat dann eine undefinierbare und beliebige Geometrie. Hierdurch wird eine maximale Korrektur des Sehfehlers des Rezepteigners erreicht.

Der Form der Rezeptfreiformfläche sind jedoch Grenzen auferlegt, da der Materialabhub von der Rohlinse begrenzt ist, da zu dünne Brillengläser bestehende Anforderungen an eine ausreichende Stabilität nicht erfüllen können. Außerdem muss die Rezeptfreiformfläche innerhalb der Rohlinse liegen, da ausschließlich Material abgetragen, nicht jedoch hinzugefügt werden kann.

Die Erfindung kann weiterhin vorsehen, dass die Vorderseite und die Rezeptfläche derart gestaltet werden, dass sie zusammen, nach Anpassung der Rezeptlinse an ein Brillengestell, wenigstens ein bifokales Brillenglas, vorzugsweise jedoch ein multifokales Brillenglas bilden. Multifokale Brillengläser finden bei heutigen Brillenträgern größeren Zuspruch. Dies liegt vor allem an einem höheren Sehkomfort ohne harten Übergang, der eine verbesserte Korrektur des Sehfehlers bei verschiedenen Abständen von Gegenständen zum Auge ermöglicht.

Die Vorderseite weist mehrere Sphären auf, wodurch die Rezeptfläche im Wesentlichen derart gestaltet werden kann, dass ein Brillenträger in jedem Blickwinkel möglichst senkrecht auf sie blickt. Idealerweise würden die Ebenennormalenvektoren der Rezeptfläche in jeder Blickrichtung auf einer Achse mit dieser liegen. Der Brillenträger würde demnach immer senkrecht auf die Glasfläche blicken. Die Rezeptfläche basiert jedoch in erster Linie auf den Rezeptdaten. Um das Erfordernis des senkrechten Blickwinkels trotzdem zu erfüllen, muss deswegen bereits die Vorderseite derart gestaltet sein, dass die korrespondierende Rückseite dieses Erfordernis erreicht. Die Anordnung mehrer Sphären auf der Vorderseite hilft hierbei und gleichzeitig muss die Vorderseite nicht derart geformt werden, dass sie den Anforderungen an die Ästhetik nicht mehr genügt.

In einer besonders vorteilhaften Ausgestaltung der Erfindung ist vorgesehen, dass die Mittelachse in nasaler Richtung des optischen Zentrums liegt. Die Mittelachse sollte jedoch noch Bestandteil des Brillenglases sein. Hierdurch ist es möglich, das Brillenglas nicht aus dem Zentrum der Rohlinse zu gewinnen, sondern in einer Orientierung Richtung Rand. Insbesondere Sportbrillen beziehungsweise sportliche Brillen haben Brillengestelle, die in nasaler Richtung, d.h. Richtung Nase, eher Flach gestaltet sind und in temporaler Richtung, d.h. in Richtung Schläfe, der Kopfform durch eine verstärkte Krümmung folgen. Die Erfindung ermöglicht es, hochwertige Brillengläser für diese Brillengestelle zu fertigen, indem der temporale Bereich des Brillenglases weiter in den Randbereich der Rohlinse verlagert wird und der nasale Bereich des Brillenglases ins Zentrum.

Weiterhin kann die Mittelachse der Rohlinse oberhalb des optischen Zentrums des Brillenglases liegen. Die Krümmung des Brillenglases nimmt dementsprechend in Richtung des unteren Brillenglasrands stärker zu als in Richtung des oberen Brillenglasrands.

Durch das Auseinanderfallen der Nullblickrichtung und der Mittelachse der Rohlinse wird neben einer sportlich dynamischen Brillenglasästhetik erreicht, dass die Rezeptfläche in allen Blickrichtungen senkrecht zur Blickrichtung eines Brillenträgers ausrichtbar ist. Dies verringert Verzeichnungen, welche bei einer nicht senkrechten Anordnung der Blickrichtung zur Rückseite des Brillenglases durch die prismatische Aufspaltung des Lichtes in seine Spektralfarben auftritt. Die verringerte Verzeichnung führt zu einem hohen Tragekomfort, da aus den Unschärfen resultierende Übelkeiten, Kopfschmerzen und Schwindelgefühle vermieden werden. Zudem sind für den Brillenträger Gegenstände in einem größeren Blickwinkel erkennbar, sodass eine hohe Sicherheit gegeben ist.

Um möglichst dünne Brillengläser möglichst kostengünstig und schnell herstellen zu können, sollten bei dem Verfahren mehrere unterschiedliche Rohlinsen gefertigt werden, die unterschiedliche Gesamtkrümmungen auf der Vorderseite und der Rückseite aufweisen. Dabei bilden die Vorderseite und die Rückseite wenigstens einen Brennpunkt, der durch eine Nachbearbeitung der Rückseite zu einer Rezeptfläche nur beschränkt verändert werden kann, wobei die Gesamtkrümmungen der unterschiedlichen Rohlinsen derart gestaffelt werden, dass passend gestaffelte Rohlinsen für alle typischen Brillengläser verfügbar sind. Dabei ist jedoch auch zu beachten, dass zwar die Bearbeitungszeit zur Erstellung einer Rezeptlinse bei steigender Anzahl an unterschiedlichen Rohlinsen sinkt, dagegen steigen jedoch die Lagerhaltungs- und Logistikkosten.

In einer alternativen Ausführungsform des Verfahrens wird die Staffelung der Rohlinsen derart ausgelegt, dass das Gesamtvolumen eines Brillenglases nach der Bearbeitung der Rückseite minimiert wird. Hieraus ergibt sich ein dünnes Brillenglas mit geringem Gewicht. Der Tragekomfort ist somit hoch und auch hohen ästhetischen Anforderungen wird genügt.

Weiterhin könnte die Staffelung der Rohlinsen derart ausgelegt werden, dass die Nachbearbeitungszeit der Rückseite minimiert wird, indem der Materialabhub bei der Fertigung der Rezeptfläche möglichst gering ist. Hieraus resultieren geringere Nachbearbeitungszeiten, was die Fertigungskosten für ein Brillenglas senkt.

Optional kann für das Verfahren auch eine Werkzeugaufnahme zur Aufnahme der Rohlinse in einer CNC-Maschine angefertigt werden. Dabei könnte eine Werkzeugaufnahmeoberfläche derart gestaltet werden, dass sie ein Negativabbild der Vorderseite einer Rohlinse ist. Dadurch könnten die erfindungsgemäßen Rohlinsen in idealer Weise von den CNC-Maschinen aufgenommen werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine schematische Konstruktion eines Vorderseitenquerschnitts, bestehend aus zwei tangential aneinandergrenzenden sphärischen Abschnitten;
- Fig. 2: eine Draufsicht auf eine kreisrunde Rohlinse mit mehreren Sphären;
- Fig. 3: eine erste Freiformfläche bestehend aus mehreren Sphären;
- Fig. 4: eine Rohlinse mit einer zweiten Freiformfläche bestehend aus mehreren Sphären;
- Fig. 5: ein Brillengestell mit zwei Brillengläsern;
- Fig. 6: eine Werkzeugaufnahme mit einer Rohlinse; und
- Fig. 7: eine Draufsicht auf eine kreisrunde Rohlinse mit mehreren Sphären und Positionierung eines Brillenglases in der Rohlinse.

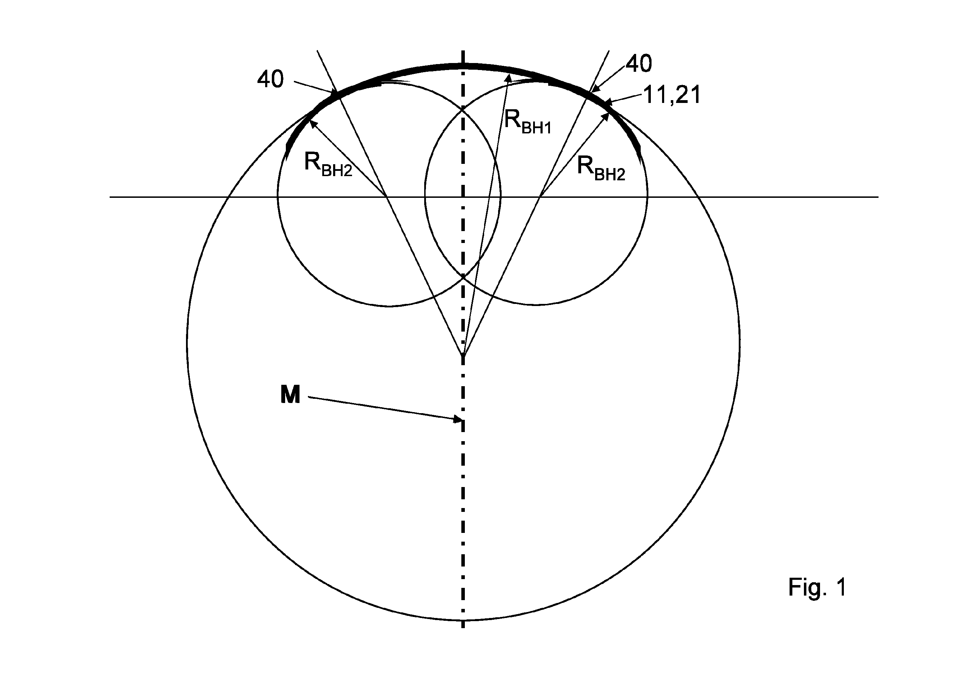

Figur 1 zeigt einen Querschnitt durch eine erfindungsgemäße Vorderseite 11 einer Rohlinse mit einer Mittelachse M. Die Vorderseite ist als erfindungsgemäße Freiformfläche 21 gestaltet, die aus zwei in einem Sphärenübergang 40 tangential aneinandergrenzenden sphärischen Abschnitten besteht. Die der Mittelachse M näher liegende Sphäre hat dabei einen Radius R_{BH1} und die von der Mittelachse M weiter entfernt liegende Sphäre einen Radius R_{BH2}, wobei der Radius R_{BH1} größer als der Radius R_{BH2} ist. Dabei liegt der Mittelpunkt des Radius R_{BH1} auf der Mittelachse M. Die Mittelachse M stellt eine Spiegelachse für den Schnitt durch die Vorderseite 11 dar. Um die Vorderseite 11 als Fläche zu erhalten, ist eine Rotation des Schnittes durch die Vorderseite 11 um die Mittelachse M durchzuführen.

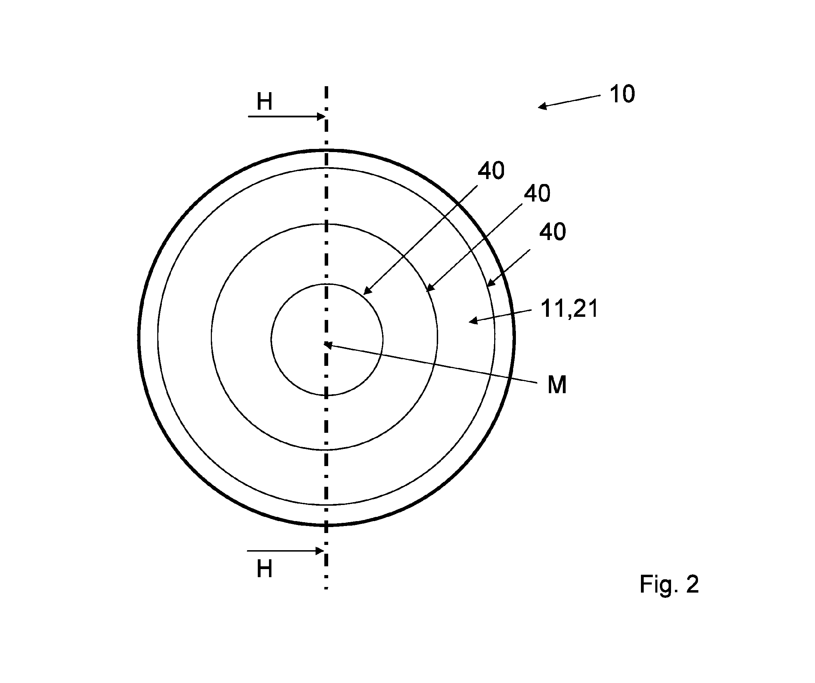

In Figur 2 ist eine erfindungsgemäße Rohlinse 10 in einer Draufsicht aus Richtung der Mittelachse M dargestellt. Eine Vorderseite 11 ist eine erste Freiformfläche 21 und setzt sich aus mehreren sphärischen Abschnitten zusammen, die rotationssymmetrisch um die Mittelachse M angeordnet sind. Sphärenübergänge 40 zeigen dabei die Grenzen zwischen den Abschnitten, die unterschiedliche Sphärenradien aufweisen. Weiterhin ist eine Schnittebene H-H gekennzeichnet.

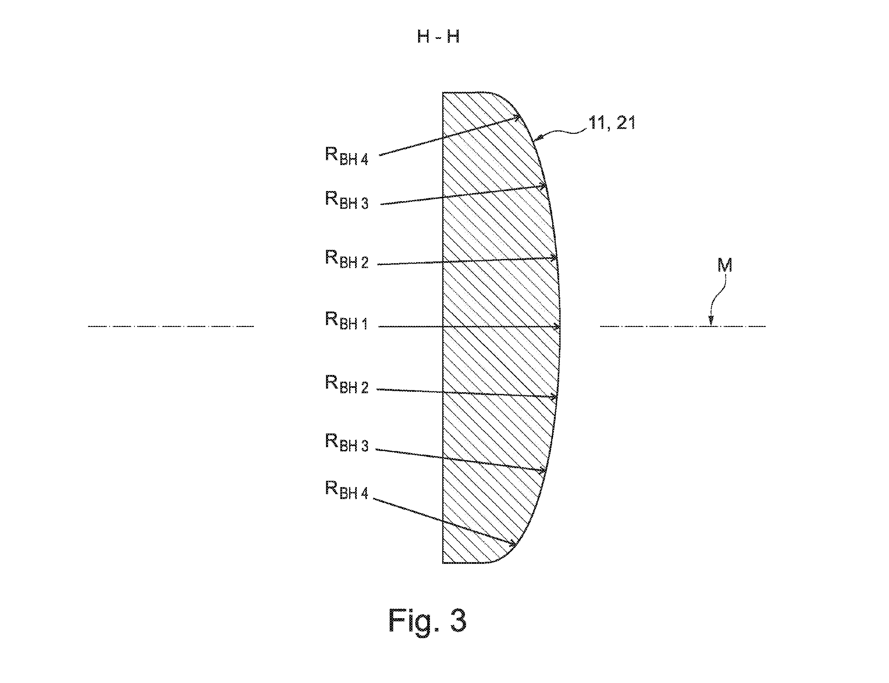

Figur 3 zeigt in der Schnittebene H-H eine Vorderseite 11, die aus einer ersten Freiformfläche 21 besteht. Die erste Freiformfläche 21 ist rotationssymmetrisch um eine Mittelachse M und setzt sich aus vier Sphären unterschiedlicher Radien zusammen. Dabei ist der Radius der Sphäre, die ein näher an der Mittelachse M liegender sphärischer Abschnitt der Vorderseite 11 ist, größer als der Radius des sphärischen Abschnitts der Vorderseite 11, der weiter von der Mittelachse M entfernt ist. Das heißt R_{BH1} > R_{BH2} > R_{BH3} > R_{BH4}.

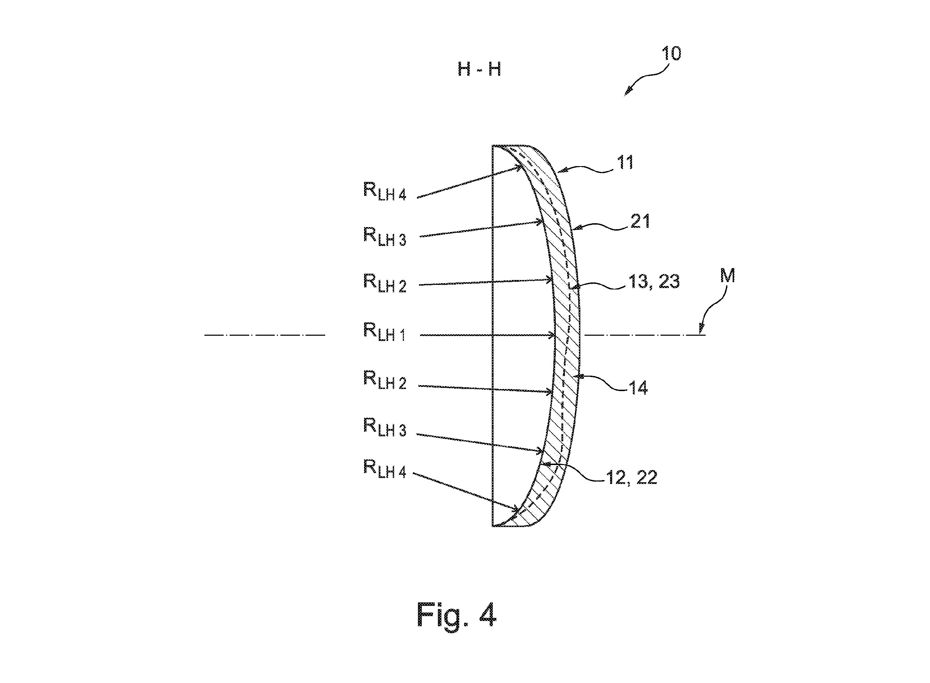

Figur 4 zeigt eine Rohlinse 10 mit einer Vorderseite 11 und einer Rückseite 12 in der Schnittebene H-H. Die Vorderseite 11 ist eine erste Freiformfläche 21, ist rotationssymmetrisch um eine Mittelachse M und setzt sich aus mehreren Sphären unterschiedlicher Radien zusammen. Die Rückseite 12 besteht aus einer zweiten Freiformfläche 22, ist rotationssymmetrisch um eine Mittelachse M und setzt sich aus vier Sphären unterschiedlicher Radien zusammen. Dabei ist der Radius des sphärischen Abschnitts der Rückseite 12, der näher an der Mittelachse M liegt, größer als der Radius des sphärischen Abschnitts der Rückseite 12, der weiter von der Mittelachse M entfernt ist. Das heißt R_{LH1} > R_{LH2} > R_{LH3} > R_{LH4}.

Durch Nachbearbeitung der Rückseite 12, kann durch Materialabhub aus der zweiten Freiformfläche 22 eine Rezeptfläche 13 hergestellt werden. Die Berechnung des Materialabhubs ist insbesondere deshalb wichtig, da nur so die Zustelltiefe eines Werkzeugs, z.B. die einer CNC-Fräse berücksichtigt werden kann. Diese Berücksichtigung der Zustelltiefe verhindert Werkzeug- und Werkstückschäden und erhöht die Qualität, vor allem die der Rautiefe, der bearbeiteten Oberfläche. Insbesondere handelt es sich bei der gezeigten Rezeptfläche 13 um eine Rezeptfreiformfläche 23. Diese ist nicht rotationssymmetrisch. Das verbleibende Volumen der Rohlinse 10 zwischen der Rezeptfreiformfläche 23 und der ersten Freiformfläche 21 ergibt eine Rezeptlinse 14.

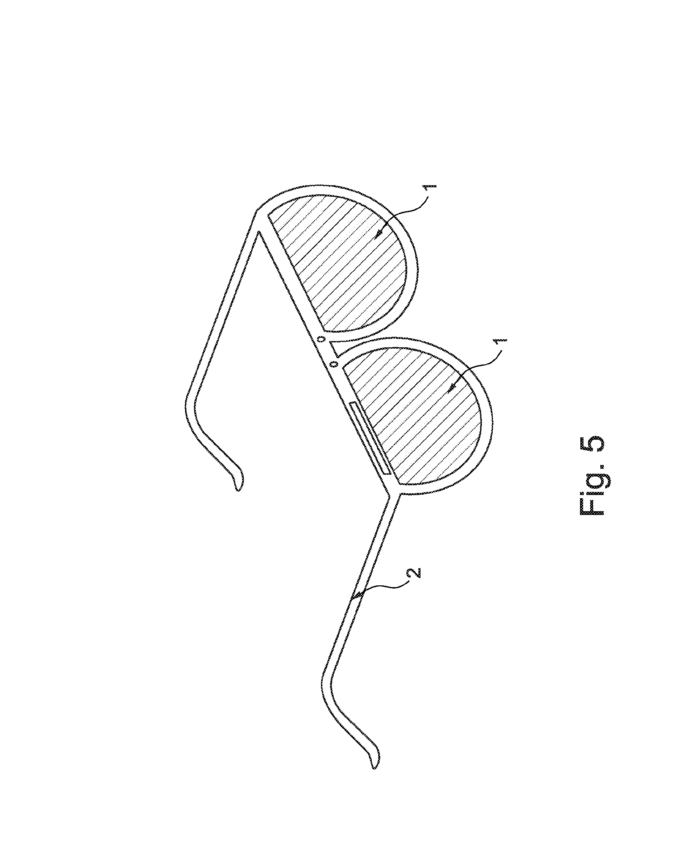

Figur 5 zeigt eine Brille bestehend aus einem Brillengestell 2 und zwei Brillengläsern 1. Die Brillengläser 1 haben eine Ausrichtung relativ zu einem nicht dargestellten Brillenträger, wobei ein Bereich des Brillenglases 1 oben O, einer unten U, einer nasal N und einer temporal T angeordnet ist. Bei einem Geradeausblick (Nullblickrichtung) des Brillenträgers, schaut dieser durch ein optisches Zentrum Z des Brillenglases 1.

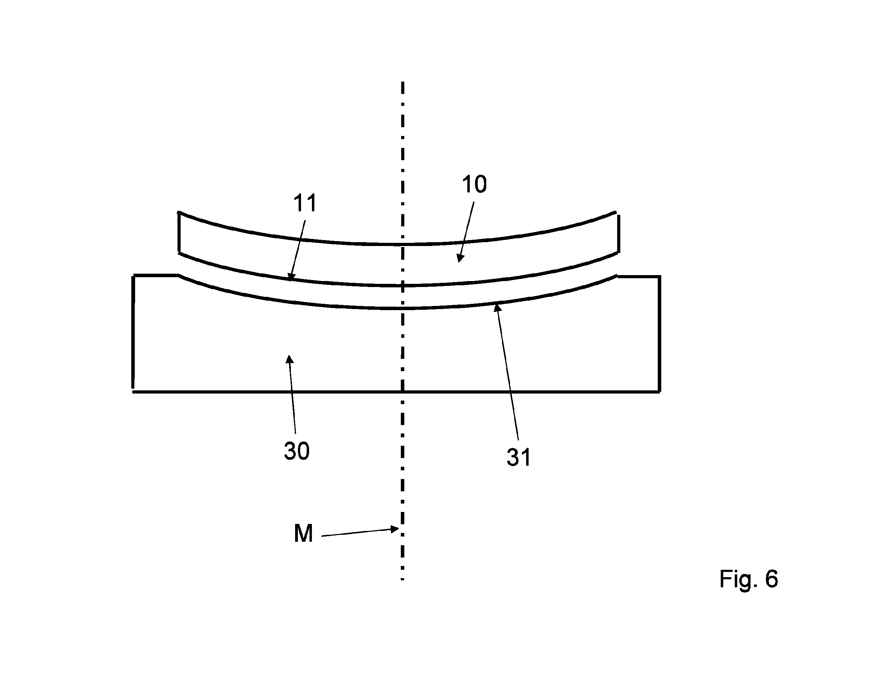

Figur 6 zeigt eine Werkzeugaufnahme 30 für eine Rohlinse 10. Dabei hat die Werkzeugaufnahme 30 eine Werkzeugaufnahmeoberfläche 31, die eine Negativform der RohlinsenVorderseite 11 ist. Zur Positionierung der Rohlinse 10 in der Werkzeugaufnahme 30 stimmt eine Mittelachse der Werkzeugaufnahme 30 mit der Mittelachse M der Rohlinse 10 überein.

Fig. 7 beschreibt eine erfindungsgemäße Rohlinse 10 in einer Draufsicht aus Richtung der Mittelachse M. Eine Vorderseite 11 ist als erste Freiformfläche 21 ausgebildet und setzt sich aus mehreren sphärischen Abschnitten zusammen, die rotationssymmetrisch um die Mittelachse M angeordnet sind. Sphärenübergänge 40 zeigen dabei die Grenzen zwischen den Abschnitten, die unterschiedliche Sphärenradien aufweisen. Weiterhin ist dargestellt, aus welchem Bereich der Rohlinse 10 ein Brillenglas 1 gefertigt wird. Das Brillenglas 1 hat in einem späteren Brillengestell eine Ausrichtung relativ zum Brillenträger, wobei ein Bereich des Brillenglases 1 oben O, einer unten U, einer nasal N und einer temporal T angeordnet ist.

Bei einem Geradeausblick (Nullblickrichtung) des Brillenträgers, schaut dieser durch ein optisches Zentrum Z des Brillenglases 1. Dieses optische Zentrum Z stimmt nicht mit der Mittelachse M der Rohlinse 10 überein. Insbesondere ist die Mittelachse M in nasaler Richtung N des optischen Zentrums Z angeordnet. Sofern die sphärischen Abschnitte mit zunehmendem Abstand von der Mittelachse M kleinere Sphärenradien aufweisen, nimmt die Krümmung des Brillenglases 1 in temporaler Richtung T zu. Mithin ist das Brillenglas 1 in nasaler Richtung N relativ flach und folgt in temporaler Richtung T durch eine zunehmende Krümmung der Kopfform des Brillenträgers in Richtung von dessen Schläfe.

Zusätzlich ist die Mittelachse M in Richtung nach oben O von dem optischen Zentrum Z des Brillenglases 1 positioniert. Dies hat zur Folge, dass das Brillenglas 1 oben O flacher ist als unten U. Insbesondere im unteren U Nahsichtbereich des Brillenglases 1 ist die Rückseite des Brillenglases 1 nunmehr derart gestaltbar, dass sie konkav und weitestgehend senkrecht zur Blickrichtung des Brillenträgers ausgerichtet ist. Unschärfen und Verzeichnungen werden hierdurch vermieden.

Wie in Fig. 7 zu erkennen ist, liegt die Mittelachse M der Rohlinse 10 jedoch nur so stark außerhalb des optischen Zentrum Z des Brillenglases 1, dass diese noch im Bereich des späteren Brillenglases 1 angeordnet ist.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Brillenglas
- 2: Brillengestell

- 10: Rohlinse
- 11: Vorderseite
- 12: Rückseite
- 13: Rezeptfläche
- 14: Rezeptlinse

- 21: erste Freiformfläche
- 22: zweite Freiformfläche
- 23: Rezeptfreiformfläche

- 30: Werkzeugaufnahme
- 31: Werkzeugaufnahmeoberfläche

- 40: Sphärenübergang

- R_{BH1} - R_{BHn}: Sphärenradien der ersten Freiformfläche
- R_{LH1} - R_{LHn}: Sphärenradien der zweiten Freiformfläche

- M: Mittelachse der Rohlinse
- N: nasal
- O: oben
- T: temporal
- U: unten
- Z: optisches Zentrum des Brillenglases

## Patentansprüche

1. Verfahren zum Herstellen von Brillengläsern (1) aus spanlos vorgefertigten Rohlinsen (10), die eine senkrecht auf der Rohlinse (10) stehende Mittelachse (M) haben, wobei die Rohlinsen (10) eine konvexe und rotationssymmetrisch um die Mittelachse (M) ausgebildete und nicht nachzubearbeitende Vorderseite (11) sowie eine mittels CNC-Maschine nachzubearbeitende gegenüberliegende Rückseite (12) aufweisen, die gemeinsam wenigstens einen optischen Brennpunkt haben, wobei zur Nachbearbeitung der Rückseite (12) eine Rezeptfläche (13) auf Basis eines einen Sehfehler beschreibenden Rezepts eines Rezepteigners derart berechnet wird, dass die bearbeitete Rückseite (12) gemeinsam mit der Vorderseite (11) eine Rezeptlinse (14) bildet, deren Brennpunkte den Sehfehler des Rezepteigners korrigieren, wobei aus der Rezeptlinse (14) durch Anpassung an ein Brillengestell (2) ein Brillenglas (1) mit einem optischen Zentrum (Z), durch welches ein Brillenträger bei einem Geradeausblick (Nullblickrichtung) schaut, gefertigt wird, **dadurch gekennzeichnet, dass** die Vorderseite (11) der Rohlinse (10) als eine erste Freiformfläche (21) ausgebildet wird, die sich von der Mittelachse (M) nach außen aus wenigstens zwei sphärischen Abschnitten unterschiedlicher Radien (R_{BH1} - R_{BHn}) zusammensetzt und die sphärischen Abschnitte tangential in einem Sphärenübergang (40) aneinandergrenzen, und wobei die Rezeptlinse (14) derart an das Brillengestell (2) angepasst wird, dass die Mittelachse (M) der Rohlinse (10) außerhalb des optischen Zentrums (Z) des Brillenglases (1) liegt.

2. Verfahren nach Anspruch 1, **dadurch gekennzeichnet, dass** die Rückseite (12) der Rohlinse (10) derart gestaltet wird, dass sie sphärisch oder asphärisch ist.

3. Verfahren nach Anspruch 1, **dadurch gekennzeichnet, dass** die Rückseite (12) der Rohlinse (10) derart gestaltet wird, dass sie eine konkave und rotationssymmetrische zweite Freiformfläche (22) ist, die sich von der Mittelachse (M) nach außen aus wenigstens zwei sphärischen Abschnitten unterschiedlicher Radien (R_{LH1} - R_{LHn}) zusammensetzt und die sphärischen Abschnitte tangential in einem Sphärenübergang (40) aneinandergrenzen.

4. Verfahren nach Anspruch 3, **dadurch gekennzeichnet, dass** der näher an der Mittelachse (M) angeordnete sphärische Abschnitt der Rückseite (12) einen größeren Radius hat als ein weiter von der Mittelachse (M) entfernter sphärischer Abschnitt der Rückseite (12).

5. Verfahren nach einem der vorhergehenden Ansprüche, **dadurch gekennzeichnet, dass** der näher an der Mittelachse (M) angeordnete sphärische Abschnitt der Vorderseite (11) einen größeren Radius hat als ein weiter von der Mittelachse (M) entfernter sphärischer Abschnitt der Vorderseite (11).

6. Verfahren nach einem der vorhergehenden Ansprüche, **dadurch gekennzeichnet, dass** eine Glättung an wenigstens einem Sphärenübergang (40) von aneinandergrenzenden sphärischen Abschnitten erfolgt, wobei nach der Glättung
jeder Punkt auf der Vorderseite (11) und/oder der Rückseite (12) mathematisch differenzierbar ist, sowie
der geglättete Übergang nicht sphärisch ist, und tangential an die sphärischen Abschnitte angrenzt.

7. Verfahren nach einem der vorhergehenden Ansprüche, **dadurch gekennzeichnet, dass** die Vorderseite (11) und die Rückseite (12) derart gestaltet werden, dass sie zusammen eine multifokale Rohlinse (10) bilden.

8. Verfahren nach einem der vorhergehenden Ansprüche, **dadurch gekennzeichnet, dass** die Rezeptfläche (13) eine konkave Rezeptfreiformfläche (23) ist.

9. Verfahren nach einem der vorhergehenden Ansprüche, **dadurch gekennzeichnet, dass** die Vorderseite (11) und die Rezeptfläche (13) derart gestaltet werden, dass sie zusammen, nach Anpassung der Rezeptlinse (14) an ein Brillengestell (2), wenigstens ein bifokales Brillenglas (1) bilden.

10. Verfahren nach einem der vorhergehenden Ansprüche, **dadurch gekennzeichnet, dass** die Rezeptfläche (13) derart gestaltet wird, dass ein Brillenträger in jedem Blickwinkel senkrecht auf sie blickt.

11. Verfahren nach einem der vorhergehenden Ansprüche, **dadurch gekennzeichnet, dass** die Mittelachse (M) der Rohlinse (10) in nasaler Richtung (N) des optischen Zentrums (Z) des Brillenglases (1) liegt.

12. Verfahren nach einem der vorhergehenden Ansprüche, **dadurch gekennzeichnet, dass** die Mittelachse (M) der Rohlinse (10) oberhalb (O) des optischen Zentrums (Z) des Brillenglases (1) liegt.

13. Verfahren nach einem der vorhergehenden Ansprüche, **dadurch gekennzeichnet, dass** die Mittelachse (M) innerhalb des Brillenglases (1) angeordnet ist.
